# EUROPÄISCHE PATENTSCHRIFT

(11) **EP 2 556 115 B1**
(45) Veröffentlichungstag und Bekanntmachung des Hinweises auf die Patenterteilung: **04.12.2013**
(21) Anmeldenummer: 11714254.7
(22) Anmeldetag: 06.04.2011
(51) Int. Cl.: C08L 77/02, C08L 77/06, B29C 67/00

(54) **POLYMERPULVER AUF DER BASIS VON POLYAMIDEN, VERWENDUNG IN EINEM FORMGEBENDEN VERFAHREN UND FORMKÖRPER, HERGESTELLT AUS DIESEM POLYMERPULVER**
POLYAMIDE-BASED POLYMER POWDER, USE THEREOF IN A MOLDING METHOD, AND MOLDED ARTICLES MADE FROM SAID POLYMER POWDER
POUDRE POLYMÈRE À BASE DE POLYAMIDES, UTILISATION DE LADITE POUDRE DANS UN PROCÉDÉ DE FAÇONNAGE ET CORPS FAÇONNÉS PRODUITS À PARTIR DE LADITE POUDRE POLYMÈRE

(30) Priorität: 02.12.2010 DE 102010062347; 09.04.2010 DE 102010014443
(43) Veröffentlichungstag der Anmeldung: 13.02.2013
(73) Patentinhaber: Evonik Degussa GmbH, 45128 Essen (DE)
(72) Erfinder: BAUMANN, Franz-Erich, 48249 Dülmen (DE); DIEKMANN, Wolfgang, 45731 Waltrop (DE); KÜTING, Beatrice, 45772 Marl (DE); STEMMER, Heike, 45721 Haltern am See (DE); GREBE, Maik, 44805 Bochum (DE); WARNKE, Kristiane, 45665 Recklinghausen (DE); MONSHEIMER, Sylvia, 45721 Haltern am See (DE); HÄGER, Harald, 59348 Lüdinghausen (DE)
(86) Internationale Anmeldenummer: PCT/EP2011/055316
(87) Internationale Veröffentlichungsnummer: WO 2011/124588

(56) Entgegenhaltungen:
- EP-A1- 1 642 923
- WO-A1-2008/057844
- DE-A1- 3 441 708
- DE-A1-102004 020 453
- DATABASE WPI Week 200904 Thomson Scientific, London, GB; AN 2009-A80760 XP002615434, -& CN 101 148 541 A (UNIV HUAZHONG SCI & TECHNOLOGY) 26. März 2008 (2008-03-26)

## Beschreibung

Die zügige Bereitstellung von Prototypen ist eine in der jüngsten Zeit häufig gestellte Aufgabe. Besonders geeignet sind Verfahren, die auf der Basis von pulverförmigen Werkstoffen arbeiten, und bei denen schichtweise durch selektives Aufschmelzen und Verfestigen die gewünschten Strukturen hergestellt werden. Auf Stützkonstruktionen bei Überhängen und Hinterschnitten kann dabei verzichtet werden, da das die aufgeschmolzenen Bereiche umgebende Pulverbett ausreichende Stützwirkung bietet. Ebenso entfällt die Nacharbeit, Stützen zu entfernen. Die Verfahren sind auch für die Herstellung von Kleinserien geeignet. In letzterem Fall stellen sich in zunehmendem Maß neue Forderungen, dass die mechanischen Eigenschaften der Sinterteile denjenigen von Spritzgußteilen möglichst nahe kommen sollen; insbesondere die Zähigkeit der Sinterteile aus Pulvern nach dem Stand der Technik befriedigt noch nicht vollkommen. Auch an die Wärmeformbeständigkeit werden immer höhere Anforderungen gestellt. Die nach DE102004020453 erhältlichen Pulver auf der Basis von ABBB-Polyamiden erlauben die Herstellung höher wärmeformbeständiger Formteile, deren Zähigkeit ist jedoch noch nicht voll befriedigend.

Die Erfindung betrifft cogefällte Polymerpulver auf Basis eines Polyamides des AABB-Types, hergestellt durch Polykondensation von Diaminen mit Dicarbonsäuren, mit Polyamiden des AB-Typs, hergestellt auf der Basis von Lactamen und/oder Aminocarbonsäuren, die Verwendung dieser Pulvers in formgebenden Verfahren, sowie Formkörper, hergestellt durch ein schichtweise arbeitendes Verfahren, mit welchem selektiv Bereiche einer Pulverschicht durch den Eintrag elektromagnetischer Energie aufgeschmolzen werden, unter Verwendung dieser Pulvers. Nach Abkühlen und Verfestigen der zuvor Schicht für Schicht aufgeschmolzenen Bereiche kann der Formkörper dem Pulverbett entnommen werden.

Die Selektivität der schichtweise arbeitenden Verfahren kann dabei beispielsweise über Suszeptoren, Inhibitoren, Masken, oder über fokussierte Energieeinbringung, wie beispielsweise durch einen Laserstrahl oder über Glasfasern erfolgen. Der Energieeintrag wird über elektromagnetische Strahlung erreicht.

Im Folgenden werden einige Verfahren beschrieben, mit denen aus dem erfindungsgemäßen Pulver erfindungsgemäße Formteile hergestellt werden können, ohne dass die Erfindung darauf beschränkt werden soll.

Ein Verfahren, welches besonders gut für den Zweck des Rapid Prototypings geeignet ist, ist das selektive Laser-Sintern. Bei diesem Verfahren werden Kunststoffpulver in einer Kammer selektiv kurz mit einem Laserstrahl belichtet, wodurch die Pulver-Partikel, die von dem Laserstrahl getroffen werden, schmelzen. Die geschmolzenen Partikel laufen ineinander und erstarren schnell wieder zu einer festen Masse. Durch wiederholtes Belichten von immer neu aufgebrachten Schichten können mit diesem Verfahren dreidimensionale Körper einfach und schnell hergestellt werden.

Das Verfahren des Laser-Sinterns (Rapid Prototyping) zur Darstellung von Formkörpern aus pulverförmigen Polymeren wird ausführlich in den Patentschriften US 6,136,948 und WO 96/06881 (beide DTM Corporation) beschrieben. Eine Vielzahl von Polymeren und Copolymeren wird für diese Anwendung beansprucht, wie z. B. Polyacetat, Polypropylen, Polyethylen, Ionomere und Polyamid.

Andere gut geeignete Verfahren sind das SIV-Verfahren wie in WO 01/38061 beschrieben, oder ein Verfahren wie in EP 1 015 214 beschrieben. Beide Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in DE 103 56 193 beschrieben. Bei diesem wird die zum Verschmelzen benötigte Energie durch einen Mikrowellengenerator eingebracht und die Selektivität wird durch Auftragen eines Suszeptors erreicht.

Für die genannten Rapid-Prototyping- bzw. Rapid-Manufacturing-Verfahren (RP- oder RM-Verfahren) können pulverförmige Substrate, insbesondere Polymere, vorzugsweise ausgewählt aus Polyester, Polyvinylchlorid, Polyacetal, Polypropylen, Polyethylen, Polystyrol, Polycarbonat, Poly-(N-methylmethacrylimide) (PMMI), Polymethylmethacrylat (PMMA), lonomer, Polyamid, oder Gemische davon, eingesetzt werden.

In WO 96/30195 wird ein für das Lasersintern geeignetes Polymerpulver beschrieben, das bei der Bestimmung des Schmelzverhaltens durch Differential Scanning Calorimetry bei einer Scanning rate von 10-20 C/min keine Überlappung des Schmelze-und Rekristallisationspeaks zeigt, einen ebenfalls durch DSC bestimmten Kristallinitätsgrad von 10-90% aufweist, ein zahlenmäßiges Mittel des Molekulargewichtes Mn von 30.000-500.000 hat und dessen Quotient M_{w}/Mₙ im Bereich von 1 bis 5 liegt.

DE 197 47 309 beschreibt die Verwendung eines Polyamid 12-Pulvers mit erhöhtem Schmelzepeak und erhöhter Schmelzenthalpie, welches durch Umfällung eines zuvor durch Ringöffnung und anschließende Polykondensation von Laurinlactam hergestellten Polyamids erhalten wird. Es handelt sich dabei um ein Polyamid des AB-Typs. Die Wärmeformbeständigkeit der daraus durch einen Sinterprozeß gebildeten Formteile liegt allerdings nicht wesentlich über der von PA12-Spritzgußteilen. Die nach DE102004020453 erhältlichen Pulver auf der Basis von ABBB-Polyamiden erlauben die Herstellung höher wärmeformbeständiger Formteile; ihr Einsatz im Gemisch mit separat hergestellten Pulvern auf der Basis von Fällpulvern aus AB-Polyamiden stößt in der Regel auf Probleme, da deren unterschiedliche Aufschmelztemperatur zu inhomogenem Gefüge der Sinterteile führt und daher deren Zähigkeit nicht voll befriedigend ist.

Aufgabe der vorliegenden Erfindung war es deshalb, ein Polymerpulver bereitzustellen, welches die Erzeugung möglichst zäher Formkörper mit erhöhter Wärmeformbeständigkeit ermöglicht, die in allen schichtweise arbeitenden Verarbeitungsverfahren eingesetzt werden können.

Überraschenderweise wurde nun gefunden, dass sich durch die Cofällung von geeignet ausgewählten Polyamiden durch Fällungskristallisation Polymerpulver herstellen lassen, die die genannten Probleme vermeiden und mechanischer Kennwerte aufweisen wie aus einem Polymerpulver nach dem Stand der Technik, beispielsweise nach DE 197 47 309 oder auch DE102004020453. Es gelingt durch Cofällung von AB-Polyamiden mit 10-12 Kohlenstoffatomen in der Monomereinheit und AABB-Polyamiden auf der Basis von Diaminen und Dicarbonsäuren mit jeweils 10-14 Kohlenstoffatomen in der jeweiligen Monomereinheit einheitlich schmelzende Pulver zu erzeugen die zu schlagzähen Formkörpern mit erhöhter Wärmeformbeständigkeit verarbeitet werden können.

Die durch Cofällung hergestellten Pulver weisen zudem, im Vergleich zu Pulvern des Stands der Technik, eine bessere Rieselfähigkeit bzw. Auftragbarkeit auf. Hierdurch kann die notwendige Menge an Rieselhilfe reduziert bzw. es kann ganz auf sie verzichtet werden. Dies ist vorteilhaft für die Verarbeitung, insbesondere beim Lasersintern. Die Neigung zum sogenannten Curl ist weniger ausgeprägt.

Besonders geeignet sind Copräzipitate von PA11 mit PA1010, PA11 mit PA1012, PA12 mit PA1012, PA12 mit PA1212 und PA12 mit PA1013.

Gegenstand der vorliegenden Erfindung ist deshalb ein Polymerpulver zur Verwendung in einem schichtweise arbeitenden Verfahren, bei dem selektiv Bereiche der jeweiligen Pulverschicht durch den Eintrag elektromagnetischer Energie aufgeschmolzen werden, enthaltend:
zumindest ein Polyamid des AB-Typs, hergestellt durch Polymerisation von Lactamen mit 10 - 12 Kohlenstoffatomen in der Monomereineit oder durch Polykondensation der entsprechenden ω-Aminocarbonsäuren mit 10 - 12 Kohlenstoffatomen in der Monomereinheit und
zumindest ein Polyamid des AABB-Typs, hergestellt durch Polykondensation von Diaminen und Dicarbonsäuren mit jeweils 10-14 Kohlenstoffatomen in den Monomereinheiten, wobei das Polyamid des AB-Typs bis zu 20 mol-% der AABB-Comonomereinheiten und das Polyamid des AABB-Typs bis zu 20 Mol% der AB-Monomereinheiten enthalten kann.

Bevorzugt wird als AB-Polyamid PA11 oder PA12 eingesetzt und als bevorzugtes AABB-Polyamid eines aus der Gruppe PA1010, PA1012, PA1212 und PA1013 eingesetzt. Besonders bevorzugt wird die Cofällung von PA11 mit PA1010, von PA11 mit PA1012, von PA12 mit PA1012, von PA12 mit PA1212 und von PA12 mit PA1013 vorgenommen. Der Anteil des AABB-Polyamids beträgt dabei zwischen 2 und 98 Masse-%, bevorzugt zwischen 10 und 90 Masse-% und besonders bevorzugt zwischen 30 und 70 Masse-%. Dabei weist das erfindungsgemäße cogefällte Polymerpulver eine mittels DSC ermittelte Schmelztemperatur von mindestens 175 °C auf bevorzugt eine Schmelzetemperatur von mindestens 180 °C sowie besonders bevorzugt eine Schmelzetemperatur von mindestens 185 °C auf.

Weiterhin sind für die Cofällung Copolyamide des AABB-Typs geeignet, in denen bis zu 20 mol-% der moläquivalenten Diamine und Dicarbonsäuren durch ein Lactam bzw.-eine ω-Aminocarbonsäure mit 10 -12 C-Atomen ersetzt sind, sowie Copolyamide des AB-Typs, in denen bis zu 20 mol-% der Lactame bzw. w -Aminocarbonsäuren mit 10 - 12 C-Atomen durch moläquivalente Diamine und Dicarbonsäuren mit 10-14 C-Atomen ersetzt sind. Der Einsatz dieser Copolyamid enthaltenden Mischpräzipitate ist beispielsweise dann vorteilhaft, wenn Teile mit geringer Schwindung gebaut werden sollen. Vorzugsweise wird der jeweilige Comonomeranteil in einem oder beiden cozufällenden Polyamiden auf 10 Mol-% begrenzt, ganz bevorzugt liegt der Comonomeranteil bei maximal 5 Mol-% im Hinblick auf eine höhere Wärmeformbeständigkeit.

Die erfindungsgemäß einzusetzenden Polyamide zeichnen sich dadurch aus, dass das Pulver zumindest ein AABB-Polyamid und zumindest ein AB-Polyamid aufweist. Es handelt sich dabei jeweils um Homopolymere mit der allgemeinen Formel:
- (NH-(CH₂)ₓ - NH - CO - (CH₂)_{y} - CO)_{n/2} - und
- (NH-(CH₂)_{z}-NH-CO))ₙ-
sowie Copolyamide, die jeweils bis zu 20 mol-% Monomere des jeweils anderen Typs aufweisen.

Dabei können kann sowohl die AB-Komponente als auch die AABB-Komponente völlig linear aufgebaut sein, oder leicht verzweigt sein, es kann sowohl ein Überschuss der Säureendgruppen, ein Gleichstand, oder ein Unterschuss gegenüber den Aminoendgruppen bestehen. Dazu können spezielle Regler nach dem Stand der Technik bei der Polykondensation zugegeben werden. Besonders bevorzugt ist ein ausgeglichenes Verhältnis zwischen Säure- und Aminoendgruppen, ganz besonders bevorzugt ein Säureüberschuss mit einem Verhältnis Säure zu Amin von 1,2:1 bis 5:1. Ein anderes Vorzugsgebiet ist ein Überschuss der Aminoendgruppen mit einem Verhältnis Amin zu Säure von 1,2:1 bis 5:1.

Die Nomenklatur der Polyamide wird in der ISO 1874-1 geregelt. Insbesondere im Anhang A wird die Definition und Kennzeichnung aliphatischer linearer Polyamide beschrieben. Polyamide des Typs XY, deren Verwendung erfindungsgemäß ist, werden aus Polykondensation von Diaminen mit Dicarbonsäuren erhalten. Mit x ist die Anzahl der C-Atome im Diamin, mit y die Anzahl der C-Atome in der Dicarbonsäure gemeint. Das bevorzugte Pulver weist sowohl Diamine als auch Dicarbonsäuren aliphatischer (linearer) Natur auf. Dabei finden beispielsweise als Monomerbausteine Diamine der folgenden Gruppe Verwendung: Decandiamin, Undecandiamin, 1,12-Diaminododecan. Monomere für die Dicarbonsäuren sind beispielsweise Sebazinsäure (Decandisäure, b=8), Dodecandisäure (b=10), Brassylsäure (b=11), Tetradecandisäure (b=12).

Geeignete Monomere des AB-Typs sind beispielsweise ω -Aminoundecansäure, ω - Aminododecansäure oder ω -Laurinlactam.

Ebenfalls Gegenstand der vorliegenden Erfindung sind Verfahren zur Herstellung eines erfindungsgemäßen Polymerpulvers, wobei die jeweiligen Polyamidkomponenten in einem Alkohol mit 1 - 3 Kohlenstoffatomen gemeinsam durch Erwärmen in Lösung gebracht werden, die Temperatur in einer oder mehreren Stufen auf eine Temperatur abgesenkt wird, bei der ein Mischpolyamid ausfällt, das Mischpolyamid von dem Lösungsmittel abgetrennt und/oder getrocknet wird und ggf. Hilfs- oder Füllstoffe in das Pulver eingemischt werden.

In einer Ausführungsform werden die Polyamidkomponenten bei einer Temperatur von 130°C - 180°C unter autogenem Druck in Lösung gebracht und anschließend die Temperatur in einer oder mehreren Stufen auf 90°C - 128°C abgesenkt.

Die erfindungsgemäßen Pulver werden vorzugsweise durch gemeinsame Umfällung der AB- und AABB-Polyamide aus alkoholischer Lösung unter Druck gemäß DE-OS 3510689 hergestellt. Bevorzugt wird Ethanol als Lösemittel verwendet. Die Lösetemperaturen werden im Bereich von 135-175 °C, vorzugsweise 140-165 °C, gehalten, die Abkühlraten im Bereich von 0,1 - 2,0 K/min, vorzugsweise im Bereich von 0,4 - 1,0 K/min gehalten. Die Fälltemperaturen liegen im Bereich von 90 - 130 °C vorzugsweise im Bereich von 105-125 °C. Nach dem Auflösen wird die Temperatur vorzugsweise 10 Minuten - 3 Stunden bei 110°C - 128°C gehalten wird und anschließend die Temperatur in einer oder mehreren weiteren Stufen auf 90°C - 118°C abgesenkt.

Im konkreten Einzelfall können die für das jeweilige Polyamidgemisch günstigen Löse-und Fällbedingungen durch Handversuche ermittelt werden. Die zu wählenden Polyamidkonzentrationen betragen 5 - 30 Gew.-% bezogen auf die Summe aller eingesetzten Polyamide, bevorzugt 10- 25 Gew.-%, besonders bevorzugt 13 - 22 - Gew.-%. Die zur Erreichung einer optisch klaren Polyamidlösung erforderlichen Lösetemperaturen sind durch Vorversuche zu ermitteln, wobei auch das Polyamid mit der jeweils höchsten Schmelztemperatur komplett in Lösung gehen muss.

Zur Gewinnung von Polyamidpulver mit engerer Kornverteilung ist es möglich, der eigentlichen Fällung eine Keimbildungsphase gemäß DE19708946 voran zu schalten, in der die PA-Lösung optisch klar bleibt und keine exotherme Kristallisation beobachtet wird. Hierzu wird die alkoholische Lösung 2 K bis 20 K, vorzugsweise 5 K bis 15 K über der späteren Fälltemperatur isotherm über die vorgenannte Zeit hinweg gerührt und die Temperatur mit den obigen Kühlraten dann auf die möglichst konstant zu haltende Fälltemperatur abgesenkt.

Geeignete Aggregate sind Rührkessel, vorzugsweise werden Blattrührer eingesetzt, es ist jedoch ohne Weiteres möglich, die Fällung in anderen druckfesten Apparaten durchzuführen und/oder andere Rührorgane einzusetzen. Zur Entfernung eventuell bei der späteren Verarbeitung störender Restmonomere bzw. Oligomeren kann eines oder mehrere der umzufällenden Polyamide zuvor einer Extraktion unterzogen werden.

Gegenstand der Erfindung sind weiterhin cogefällte Pulver aus von AB-Polyamiden mit 10-12 Kohlenstoffatomen in der Monomereinheit und AABB-Polyamiden auf der Basis von Diaminen und Dicarbonsäuren mit jeweils 10-14 Kohlenstoffatomen in der jeweiligen Monomereinheit sowie die vorgenannten cogefällten einheitlich schmelzenden Mischpräzipitate auf der Basis eines oder mehrerer Copolyamide, die bis zu 20 mol-% Comonomere des jeweils anderen Typs enthalten, die zu schlagzähen Formkörpern mit erhöhter Wärmeformbeständigkeit verarbeitet werden können. Besonders geeignet sind Copräzipitate von PA11 mit PA1010, PA11 mit PA1012, PA12 mit PA1012, PA12 mit PA1212 und PA12 mit PA1013.

Außerdem sind Gegenstand vorliegenden Erfindung Formkörper, hergestellt durch ein schichtweise arbeitendes Verfahren, welches selektiv Bereiche der jeweiligen Schicht durch den Eintrag elektromagnetischer Energie aufschmilzt, welche dadurch gekennzeichnet sind, dass die Pulver Copräzipitate von AB-Polyamiden mit 10-12 Kohlenstoffatomen in der Monomereinheit und AABB-Polyamiden auf der Basis von Diaminen und Dicarbonsäuren mit jeweils 10-14 Kohlenstoffatomen sowie die vorgenannten cogefällten einheitlich schmelzende Mischpräzipitate auf der Basis eines oder meherer Copolyamide die bis zu 20 mol-% Comonomere des jeweils anderen Typs enthalten, darstellen. Besonders geeignet sind Formkörper auf der Basis von Copräzipitaten von PA11 mit PA1010, PA11 mit PA1012, PA12 mit PA1012, PA12 mit PA1212 und PA12 mit PA1013.

Die erfindungsgemäßen Polymerpulver haben den Vorteil, dass aus ihnen durch ein schichtweise arbeitendes Verfahren, bei dem selektiv Bereiche der jeweiligen Schicht aufgeschmolzen werden, Formkörper mit einer erhöhten Wärmeformbeständigkeit, höheren Zähigkeitswerten, besserer Formtreue und einer besseren Oberflächenqualität gegenüber Formkörpern aus herkömmlichen Polyamidpulvern erhalten werden.

Die aus dem erfindungsgemäßen Pulver hergestellten Formkörper weisen dabei ähnlich gute mechanische Eigenschaften auf wie die aus herkömmlichen Pulvern hergestellten Formkörper. Auch die Verarbeitungsfähigkeit des erfindungsgemäßen Pulvers ist vergleichbar mit der von herkömmlichen Polyamidpulvern.

Das erfindungsgemäße Polymerpulver wird nachfolgend beschrieben, ohne dass die Erfindung darauf beschränkt sein soll.

Erfindungsgemäßes Pulver erhält man beispielsweise durch ein Verfahren in Anlehnung an DE 29 06 647 B1 oder durch DE 19708946, wobei dort ein Polyamid des AB-Types als Ausgangsmaterial verwendet wird. Das Polyamidgemisch aus AABB- und AB-Polyamid wird in Ethanol gelöst und unter bestimmten Bedingungen auskristallisiert. Gegebenenfalls wird eine Schutzsiebung und weitere Klassierung oder Kaltmahlung angeschlossen. Der Fachmann kann die Bedingungen leicht durch orientierende Vorversuche herausfinden.

Dabei weist das erfindungsgemäße cogefällte Polymerpulver eine mittels DSC ermittelte Schmelztemperatur von mindestens 175 °C auf bevorzugt eine Schmelzetemperatur von mindestens 180 °C sowie besonders bevorzugt eine Schmelzetemperatur von mindestens 185 °C auf.

Das erfindungsgemäße Pulver zeichnet sich auch durch gute Rieselfähigkeit, bzw. gute Auftragbarkeit aus. Die Menge der einzusetzenden Rieselhilfe kann reduziert, bzw. es kann gänzlich auf Rieselhilfe verzichtet werden.

Die Lösungsviskosität in 0,5%-iger m-Kresollösung nach ISO 307 beträgt bei den erfindungsgemäßen Polyamidpulvern bevorzugt 1,4 bis 2,1, besonders bevorzugt 1,5 bis 1,9, und ganz besonders bevorzugt zwischen 1,6 und 1,7.

Das erfindungsgemäße Polymerpulver weist vorzugsweise Polyamidpulvern des AB-Types sowie des AABB-Types mit einer mittleren Partikelgröße von 10 bis 250 µm, vorzugsweise von 45 bis 150 µm und besonders bevorzugt von 50 bis 125 µm auf.

Das Mengenverhältnis von AABB- zu AB-Polyamid beträgt erfindungsgemäß 1 : 99 bis 99:1, bevorzugt 10:90 bis 90:10, ganz bevorzugt 30:70 bis 70: 30 Masseteile der jeweiligen Polyamide. Werden Copolyamide eingesetzt so gelten die genannten Masseverhältnisse für die einzelnen AABB- bzw. AB-basierten Copolyamide als ganzes; jeweils identische Anteile des anderen Monomertyps sind dabei nicht erheblich.

Das erfindungsgemäße Polymerpulver weist vorzugsweise Schüttdichten gemessen nach DIN 53468 zwischen 300 und 700 g/l auf, bevorzugt zwischen 400 und 600 g/l.

Außerdem weist das erfindungsgemäße Polymerpulver vorzugsweise BET-Oberflächen, gemessen mit Stickstoffgas nach DIN ISO 9277:2003-05 (Volumetrisches Verfahren), zwischen 1 und 15 m²/g auf, besonders bevorzugt zwischen 2 und 10 m²/g, und ganz besonders bevorzugt zwischen 2,5 und 7 m²/g.

Die Ausgangsgranulate zur Verarbeitung zu erfindungsgemäßen Pulvern werden kommerziell beispielsweise von der Evonik-Degussa, Marl, Deutschland (Polyamid 12, Handelsnamen VESTAMID L-Reihe, Polyamid 1010, VESTAMID Terra DS-Reihe, Polyamid 1012, VESTAMID Terra DD-Reihe) oder von der ARKEMA, Serquigny, Frankreich (RILSAN B, Polyamid 11, RILSAN A, Polyamid 12) vertrieben.

Erfindungsgemäßes Polymerpulver kann außerdem Hilfsstoffe und/oder Füllstoffe und/oder weitere organische oder anorganische Pigmente aufweisen. Solche Hilfsstoffe können z. B. Rieselhilfsmittel, wie z. B. gefällte und/oder pyrogene Kieselsäuren sein. Pyrogene Kieselsäuren werden zum Beispiel unter dem Produktnamen Aerosil®, mit unterschiedlichen Spezifikationen, durch die Evonik-Degussa GmbH angeboten. Vorzugsweise weist erfindungsgemäßes Polymerpulver weniger als 3 Gew.-%, vorzugsweise von 0,001 bis 2 Gew.-% und ganz besonders bevorzugt von 0,05 bis 1 Gew.-% solcher Hilfsstoffe bezogen auf die Summe der vorhandenen Polymere auf. Die Füllstoffe können z. B. Glas-, Metall- oder Keramikpartikel, wie z. B. Glaskugeln, Stahlkugeln oder Metallgrieß oder Fremdpigmente, wie z. B. Übergangsmetalloxide sein. Die Pigmente können beispielsweise Titandioxidpartikel basierend auf Rutil oder Anatas sein, oder Russpartikel.

Die Füllstoffpartikel weisen dabei vorzugsweise eine kleinere oder ungefähr gleich große mittlere Partikelgröße wie die Partikel der Polyamide auf. Vorzugsweise sollte die mittlere Partikelgröße d₅₀ der Füllstoffe die mittlere Partikelgröße d₅₀ der Polyamide um nicht mehr als 20 %, vorzugsweise um nicht mehr als 15 % und ganz besonders bevorzugt um nicht mehr als 5 % überschreiten. Die Partikelgröße ist insbesondere limitiert durch die zulässige Bauhöhe bzw. Schichtdicke in der Rapid-Prototyping/ Rapid Manufacturing-Anlage.

Vorzugsweise weist erfindungsgemäßes Polymerpulver weniger als 75 Gew.-%, bevorzugt von 0,001 bis 70 Gew.-%, besonders bevorzugt von 0,05 bis 50 Gew.-% und ganz besonders bevorzugt von 0,5 bis 25 Gew.-% solcher Füllstoffe bezogen auf die Summe der vorhandenen Polyamide auf.

Beim Überschreiten der angegebenen Höchstgrenzen für Hilfs- und/oder Füllstoffe kann es, je nach eingesetztem Füll- oder Hilfsstoff, zu deutlichen Verschlechterungen der mechanischen Eigenschaften von Formkörpern kommen, die mittels solcher Polymerpulver hergestellt wurden.

Es ist ebenso möglich, herkömmliche Polymerpulver mit erfindungsgemäßen Polymerpulvern zu mischen. Auf diese Weise lassen sich Polymerpulver mit einer weiteren Kombination von Oberflächeneigenschaften herstellen. Das Verfahren zur Herstellung solcher Mischungen kann z. B. DE 34 41 708 entnommen werden.

Zur Verbesserung des Schmelzeverlaufs bei der Herstellung der Formkörper kann ein Verlaufsmittel wie beispielsweise Metallseifen, bevorzugt Alkali- oder Erdalkalisalze der zugrunde liegenden Alkanmonocarbonsäuren oder Dimersäuren, dem gefällten Polyamidpulver zugesetzt werden. Die Metallseifenpartikel können in die Polymerpartikel eingearbeitet werden, es können aber auch Mischungen von feinteiligen Metallseifenpartikeln und Polymerpartikeln vorliegen.

Die Metallseifen werden in Mengen von 0,01 bis 30 Gew.-%, vorzugsweise 0,5 bis 15 Gew.-%, bezogen auf die Summe der im Pulver vorhandenen Polyamide eingesetzt. Bevorzugt wurden als Metallseifen die Natrium- oder Calciumsalze der zugrundeliegenden Alkanmonocarbonsäuren oder Dimersäuren eingesetzt. Beispiele für kommerziell verfügbare Produkte sind Licomont NaV 101 oder Licomont CaV 102 der Firma Clariant.

Zur Verbesserung der Verarbeitungsfähigkeit oder zur weiteren Modifikation des Polymerpulvers können diesem anorganische Fremdpigmente, wie z. B. Übergangsmetalloxide, Stabilisatoren, wie z. B. Phenole, insbesondere sterisch gehinderte Phenole, Verlaufs- und Rieselhilfsmittel, wie z. B. pyrogene Kieselsäuren sowie Füllstoffpartikel zugegeben werden. Vorzugsweise wird, bezogen auf das Gesamtgewicht an Polymeren im Polymerpulver, soviel dieser Stoffe den Polymeren zugegeben, dass die für das erfindungsgemäße Polymerpulver angegeben Konzentrationen für Füll- und/oder Hilfsstoffe eingehalten werden.

Gegenstand der vorliegenden Erfindung sind auch Verfahren zur Herstellung von Formkörpern durch schichtweise arbeitende Verfahren, bei denen selektiv Bereiche durch den Eintrag elektromagnetischer Energie aufgeschmolzen werden, bei denen erfindungsgemäße Polymerpulver, erhalten durch gemeinsame Umfällung von zumindest einem Polyamid des AB-Types, hergestellt durch Polymerisation von Lactamen mit 10 - 12 Kohlenstoffatomen in der Monomereineit oder durch Polykondensation der entsprechenden ω -Aminocarbonsäuren mit 10 - 12 Kohlenstoffatomen in der Monomereinheit und zumindest einem Polyamid des AABB-Types, hergestellt durch Polykondensation von Diaminen und Dicarbonsäuren mit jeweils 10-14 Kohlenstoffatomen in den Monomereinheiten gewonnen wird, verwendet werden.

Weiterhin sind Gegenstand der Erfindung Verfahren zur Herstellung von Formkörpern durch schichtweise arbeitende Verfahren, in denen Copolyamide des AABB-Typs , in denen bis zu 20 mol-% der moläquivalenten Diamine und Dicarbonsäuren durch ein Lactam bzw.- eine ω-Aminocarbonsäure mit 10 -12 C-Atomen ersetzt sind, sowie Copolyamide des AB-Typs, in denen bis zu 20 mol-% der Lactame bzw. ω-Aminocarbonsäuren mit 10-12 C-Atomen durch moläquivalente Diamine und Dicarbonsäuren mit 10-14 C-Atomen ersetzt sind, verwendet werden. Der Einsatz dieser Copolyamid enthaltenden Mischpräzipitate ist beispielsweise dann vorteilhaft, wenn Teile mit geringer Schwindung gebaut werden sollen. Vorzugsweise wird der jeweilige Comonomeranteil in einem oder beiden cozufällenden Polyamiden auf 10 Mol-% begrenzt, ganz bevorzugt liegt der Comonomeranteil bei maximal 5 Mol-% im Hinblick auf eine höhere Wärmeformbeständigkeit.

Bevorzugt wird in den schichtweise arbeitenden Verfahren ein Mischpräzipitat aus PA11 oder PA12 sowie als AABB-Polyamid eines aus der Gruppe PA1010, PA1012, PA1212 und PA1013 eingesetzt. Besonders bevorzugt wird ein durch Cofällung erhaltenes Pulver aus PA11 mit PA1010, PA11 mit PA1012, PA12 mit PA1012, PA12 mit PA1212 und aus PA12 mit PA1013 für das schichtweise arbeitende Formgebungsverfahren eingesetzt. Der Anteil des AABB-Polyamids beträgt dabei zwischen 2 und 98 Masse-%, bevorzugt zwischen 10 und 90 Masse-% und besonders bevorzugt zwischen 30 und 70 Masse-%. Dabei weist das erfindungsgemäße cogefällte Polymerpulver eine mittels DSC ermittelte Schmelztemperatur von mindestens 175 °C auf bevorzugt eine Schmelzetemperatur von mindestens 180 °C sowie besonders bevorzugt eine Schmelzetemperatur von mindestens 185 °C auf.

Die Energie wird durch elektromagnetische Strahlung eingebracht, und die Selektivität wird beispielsweise durch Masken, Auftragung von Inhibitoren, Absorbern, Suszeptoren, oder aber durch eine Fokussierung der Strahlung eingebracht. Nach dem Abkühlen aller Schichten kann der erfindungsgemäße Formkörper entnommen werden.

Die nachfolgenden Beispiele für solche Verfahren dienen der Erläuterung, ohne die Erfindung darauf beschränken zu wollen.

Die Lasersinterverfahren sind hinlänglich bekannt und beruhen auf dem selektiven Sintern von Polymerpartikeln, wobei Schichten von Polymerpartikeln kurz einem Laserlicht ausgesetzt werden und so die Polymerpartikel, die dem Laserlicht ausgesetzt waren, miteinander verbunden werden. Durch die aufeinanderfolgende Versinterung von Schichten von Polymerpartikeln werden dreidimensionale Objekte hergestellt. Einzelheiten zum Verfahren des selektiven Laser-Sinterns sind z. B. den Schriften US 6,136,948 und WO 96/06881 zu entnehmen.

Andere gut geeignete Verfahren sind das SIV-Verfahren wie es in WO 01/38061 beschrieben, oder ein Verfahren wie in EP 1 015 214 beschrieben. Beide Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in DE 103 11 438 beschrieben. Bei diesem wird die zum Verschmelzen benötigte Energie durch einen Mikrowellengenerator eingebracht und die Selektivität wird durch Auftragen eines Suszeptors erreicht.

Die erfindungsgemäßen Formkörper, die durch ein schichtweise arbeitendes Verfahren, bei dem selektiv Bereiche aufgeschmolzen werden, hergestellt werden, zeichnen sich dadurch aus, dass sie zumindest ein Polyamid des AB-Types, hergestellt durch Polykondensation von Diaminen und Dicarbonsäuren, bevorzugt ein Polyamid des AB-Types aus der Gruppe aus von AB-Polyamiden mit 10-12 Kohlenstoffatomen in der Monomereinheit und zumindest ein Polyamid aus der Gruppe von AABB-Polyamiden auf der Basis von Diaminen und Dicarbonsäuren mit jeweils 10-14 Kohlenstoffatomen in der jeweiligen Monomereinheit aufweisen. Besonders bevorzugt sind Formkörper von PA11 im Gemisch mit PA1010, PA11 mit PA1012, PA12 mit PA1012, PA12 mit PA1212 und PA12 mit PA1013.

Besonders bevorzugt weisen die erfindungsgemäßen Formkörper als Polyamid des AABB-Types PA1010, PA1012, PA1013 oder PA1212, auf.

Die Formkörper können außerdem Füllstoffe und/oder Hilfsstoffe, wie z. B. thermische Stabilisatoren wie z. B. sterisch gehinderte Phenolderivate aufweisen. Füllstoffe können z. B. Glas-, Keramikpartikel und auch Metallpartikel wie zum Beispiel Aluminiumgrieß, Eisenkugeln, bzw. entsprechende Hohlkugeln sein. Bevorzugt weisen die erfindungsgemäßen Formkörper Glaspartikel, ganz besonders bevorzugt Glaskugeln auf. Vorzugsweise weisen erfindungsgemäße Formkörper weniger als 3 Gew.-%, vorzugsweise von 0,001 bis 2 Gew.-% und ganz besonders bevorzugt von 0,05 bis 1 Gew.-% solcher Hilfsstoffe bezogen auf die Summe der vorhandenen Polymere auf. Ebenso bevorzugt weisen erfindungsgemäße Formkörper weniger als 75 Gew.-%, bevorzugt von 0,001 bis 70 Gew.-%, besonders bevorzugt von 0,05 bis 50 Gew.-% und ganz besonders bevorzugt von 0,5 bis 25 Gew.-% solcher Füllstoffe bezogen auf die Summe der vorhandenen Polymere auf.

Die folgenden Beispiele sollen das erfindungsgemäße Polymerpulver sowie dessen Verwendung beschreiben, ohne die Erfindung auf die Beispiele einzuschränken.

### Beispiele:

Folgende Methoden wurden zur Bestimmung der Messgrößen verwendet, wobei die Messverfahren sowohl für die einzusetzenden Edukte als auch für die jeweiligen Produkte angewandt werden können.

### Partikelgrößenbestimmung

Die mittlere Teilchengröße und die Teilchengrößeverteilung wird mittels Laserbeugung bestimmt. Die Messungen werden mit einem Malvern Mastersizer 2000 durchgeführt. Es handelt sich um eine Trockenmessung. Für die Messung werden jeweils 20-40 g Pulver mittels Scirocco Trockendispergiergerät zudosiert. Die Rüttelrinne wird mit einer Zuführrate von 70% betrieben. Der Dispergierluftdruck beträgt 3 bar. Bei jeder Messung erfolgte eine Hintergrundmessung (10 Sekunden / 10000 Einzelmessungen). Die Messzeit der Probe ist 5 Sekunden (5000 Einzelmessungen). Der Brechungsindex, sowie der Blaulichtwert sind mit 1,52 festgelegt. Zur Auswertung wurde die Mie-Theorie genutzt.

Die relative Lösungsviskosität wird in 0,5 Gew.-%-iger m-Kresollösung nach ISO 307 erhalten.

Die BET-Oberfläche wird mittels Gasadsorption von Stickstoff (volumetrisch, kontinuierliche Gaszufuhr) nach DIN ISO 9277:2003-05 mit einem Gasadsorptionsgerät der Fa. Micromeritics TriStar 3000 (Software Win 3000, V6.03) zur Bestimmung der spezifischen Oberfläche nach dem BET-Verfahren bestimmt. Der Stickstoff hat einen Reinheit von 99,996 Vol.-%. Hierzu werden mehrere (sieben) Messpunkte bei Relativdrücken p/p₀ zwischen ca. 0,05 und ca. 0,20 bestimmt.

Die Kalibrierung des Totvolumens erfolgt mittels He (Reinheit mind. 99,996 %). Die Proben werden jeweils für eine Stunde bei 25 °C und für 16 Stunden bei 80 °C unter Vakuum entgast. Die spezifische Oberfläche wird auf die entgaste Probe bezogen. Die Auswertung erfolgt gemäß DIN ISO 9277:2003-05, Kap 7.2 mittels Mehrpunktbestimmung.

Schüttdichten werden gemäß DIN 53468 gemessen.

Kristallitschmelzpunkt Tₘ und Schmelzenthalpie werden mittels DSC (Perkin Elmer Diamond. Aufheizrate 20K pro min) bestimmt, angelehnt an ISO 11357 und DIN53765.

Die Rieselfähigkeit wird in Anlehnung an DIN EN ISO 6186, Verfahren A gemessen. Die Rieselfähigkeit wird charakterisiert durch die Rieselzeit. Darunter ist die Auslaufzeit t_{R} einer definierten Menge Pulver durch einen Trichter mit festgelegten Maßen zu verstehen.

Für die Prüfung werden folgende Geräte genutzt: 500 ml Becherglas, Waage mit einer Genauigkeit von ± 0,5 g, Prüftrichter nach DIN EN ISO 6186 mit Düsen von 10 mm, 15 mm, 25 mm, Stoppuhr, ablesbar auf 0,1 Sekunden.

In das Becherglas werden 150 g Pulver genau eingewogen. Etwa vorhandene Klumpen werden vorsichtig zerdrückt. Beim Einfüllen der Probe in den sauberen Auslauftrichter wird dessen Öffnung zugehalten. Dann wird die Zeit vom erschütterungsfreien Öffnen des Trichters bis zu dem Moment bestimmt, in dem das Pulver vollständig ausgelaufen ist. An den Trichterwandungen anhaftender Staub bleibt unberücksichtigt. In der Regel wird die Auslaufdüse 2 mit dem Durchmesser 15 ± 0,01 mm gewählt. Je nach Beschaffenheit des Pulvers können aber auch die Auslaufdüse 1 mit dem Durchmesser 10 ± 0,01 mm oder die Auslaufdüse 3 mit dem Durchmesser 25 ± 0,01 mm verwendet werden.

Der Durchmesser der Auslaufdüse wird als Index vermerkt.
**t_{R10}, t_{R15}, t_{R25}**

Die Rieselzeit t_{R} wird durch Mittelwertbildung aus 3 Messungen ermittelt. Die Zeit wird in ganzen Sekunden angegeben.

E-Modul und Zugfestigkeit werden gemäß DIN/EN/ISO 527, Schlagzähigkeiten gemäß ISO 179/1eA bestimmt. Vicat-Temperaturen werden nach ISO 306/2008 in Öl gemessen.

### Beispiel 1:

Zur Herstellung eines PA 1010 wurde ein 200 I-Rührautoklav mit folgenden Einsatzstoffen beschickt:
34,957 kg 1,10-Decandiamin (als 98,5,5%ige wässrige Lösung),
40,902 kg Sebacinsäure sowie

| | |
|---|---|
| 8,6 g | einer 50 %-igen wässrigen Lösung von hypophosphoriger Säure (entspricht 0,006 Gew.-%) mit |
| 25,3kg | VE-Wasser |

Die Einsatzstoffe wurden in einer Stickstoffatmosphäre aufgeschmolzen und unter Rühren im geschlossenen Autoklaven auf ca. 220 °C erhitzt, wobei sich ein Innendruck von ca. 20 bar einstellte. Dieser Innendruck wurde 2 Stunden beibehalten; danach wurde die Schmelze unter kontinuierlichem Entspannen auf Normaldruck weiter auf 270 °C aufgeheizt und danach 1,5 Stunden im Stickstoffstrom bei dieser Temperatur gehalten. Anschließend wurde innerhalb von 3 Stunden auf Atmosphärendruck entspannt und weitere 3 Stunden Stickstoff über die Schmelze geleitet, bis anhand des Drehmoments kein weiterer Anstieg der Schmelzeviskosität mehr angezeigt wurde. Danach wurde die Schmelze mittels Zahnradpumpe ausgetragen und als Strang granuliert. Das Granulat wurde 24 Stunden unter Stickstoff bei 80 °C getrocknet.
Austrag: 65 kg

Das Produkt wies folgende Kennwerte auf:

| | |
|---|---|
| Kristallitschmelzpunkt Tₘ: | 192 °C und 204 °C |
| Schmelzenthalpie: | 78 J/g |
| Relative Lösungsviskosität ηᵣₑₗ: | 1,76 |

### Beispiel 2: Herstellung von PA1012

In Anlehnung an Beispiel 1 werden folgende Einsatzstoffe miteinander umgesetzt:

| | |
|---|---|
| 34,689 kg | 1,10-Decandiamin (98,7 %-ig), |
| 46,289kg | Dodecandisäure sowie 9,2 g einer 50 %-igen wässrigen Lösung von hypophosphoriger Säure (entspricht 0,006 Gew.-%) mit |
| 20,3kg | VE-Wasser |

Das Produkt - Austrag 73,6 kg wies folgende Kennwerte auf:

| | |
|---|---|
| Kristallitschmelzpunkt Tₘ: | 191 °C |
| Schmelzenthalpie: | 74 J/g |
| Relative Lösungsviskosität ηᵣₑₗ: | 1,72 |

### Beispiel 3: Herstellung von PA1013

In Anlehnung an Beispiel 1 werden folgende Einsatzstoffe miteinander umgesetzt:

| | |
|---|---|
| 33,521 kg | 1,10-Decandiamin (98,7%-ig), |
| 47,384kg | Brassylsäure sowie |
| 9,5 g | einer 50 %-igen wässrigen Lösung von hypophosphoriger Säure (entspricht 0,006 Gew.-%) mit |
| 20,5kg | VE-Wasser |

Das Produkt wies folgende Kennwerte auf:

| | |
|---|---|
| Relative Lösungsviskosität ηᵣₑₗ: | 1,66 |
| Kristallitschmelzpunkt Tₘ: | 183 °C |
| Schmelzenthalpie: | 71 J/g |

### Beispiel 4: Herstellung von PA1212

In Anlehnung an Beispiel 1 werden folgende Einsatzstoffe miteinander umgesetzt:

| | |
|---|---|
| 33,366 kg | 1,12-Dodecandiamin (als 97,5%-ige wässrige Lösung), |
| 37,807 kg | Dodecandisäure sowie |
| 8,1 g | einer 50 %-igen wässrigen Lösung von Hypophosphoriger Säure (entspricht 0,006 Gew.-%). mit |
| 20,5kg | VE-Wasser |

Das Produkt wies folgende Kennwerte auf:

| | |
|---|---|
| Kristallitschmelzpunkt Tₘ: | 183 °C |
| Schmelzenthalpie: | 75J/g |
| Relative Lösungsviskosität ηᵣₑₗ: | 1,81 |

### Beispiel 5: Herstellung von CoPA1012/12 (92:8)

In Anlehnung an Beispiel 1 werden folgende Einsatzstoffe miteinander umgesetzt:

| | |
|---|---|
| 29,774 kg | 1,10-Decandiamin (als 99,3-%ige wässrige Lösung), |
| 39,532 kg | Dodecandisäure , |
| 5,891 kg | Laurinlactam sowie |
| 7,9 g | einer 50 %-igen wässrigen Lösung von hypophosphoriger Säure (entspricht 0,006 Gew.-%). mit |
| 25,5kg | VE-Wasser |

Das Produkt wies folgende Kennwerte auf:

| | |
|---|---|
| Kristallitschmelzpunkt Tₘ: | 186 °C |
| Schmelzenthalpie: | 75J/g |
| Relative Lösungsviskosität ηᵣₑₗ: | 1,72 |

### Beispiel 6: Umfällung von Polyamid 12 (PA 12) (nicht erfindungsgemäß)

40 kg ungeregeltes, durch hydrolytische Polymerisation hergestelltes PA 12 mit einer relativen Lösungsviskosität von 1.62 und einem Endgruppengehalt von 75 mmol/kg COOH bzw. 69 mmol/kg NH2 werden mit 2500 I Ethanol, vergällt mit 2-Butanon und 1 % Wassergehalt, innerhalb von 2,5 Stunden in einem 8001-Rührkessel auf 145 °C gebracht und unter Rühren 1 Stunde bei dieser Temperatur belassen. Anschließend wird die Manteltemperatur auf 124 °C reduziert und unter kontinuierlichem Abdestillieren des Ethanols mit einer Kühlrate von 25 K/h bei der derselben Rührerdrehzahl die Innentemperatur auf 125 °C gebracht. Von jetzt an wird bei gleicher Kühlrate die Manteltemperatur 2K - 3 K unter der Innentemperatur gehalten. Die Innentemperatur wird mit gleicher Kühlrate auf 117 °C gebracht und dann 60 Minuten konstant gehalten. Danach wird weiter bei einer Kühlrate von 40 K/h abdestilliert und so die Innentemperatur auf 111 °C gebracht. Bei dieser Temperatur setzt die Fällung, erkennbar an der Wärmeentwicklung, ein. Die Destillationsgeschwindigkeit wird soweit erhöht, dass die Innentemperatur nicht über 111.3 °C ansteigt. Nach 25 Minuten fällt die Innentemperatur ab, was das Ende der Fällung anzeigt. Durch weiteres Abdestillieren und Kühlung über den Mantel wird die Temperatur der Suspension auf 45 °C gebracht und die Suspension danach in einen Schaufeltrockner überführt. Das Ethanol wird bei 70 °C/ 400 mbar abdestilliert und der Rückstand anschließend bei 20 mbar/86 °C 3 Stunden nachgetrocknet.

Man erhält ein gefälltes PA 12 mit einem mittleren Korndurchmesser von 55 µm. Die Schüttdichte betrug 435g/l.

### Beispiel 7: Umfällung von Polyamid 11 (PA 11) (nicht erfindungsgemäß):

In Analogie zum Beispiel 6 werden 40kg eines kommerziellen PA11-Granulates (RILSAN® BMNO TL der ARKEMA) umgefällt zu einem Pulver mit folgenden Kennwerten:

| | | |
|---|---|---|
| Kristallitschmelzpunkt Tₘ: | 192 °C und 200 °C | |
| Schmelzenthalpie: | 128 J/g | |
| Relative Lösungsviskosität ηᵣₑₗ: | 1,66 | |
| Schüttdichte 391g/l. | | BET: 4,80 m²/g |
| D(10%) = 44µm D(50%) = 59µm D(90%) = 84µm | | |

### Beispiel 8: Umfällung von PA 1010 (nicht erfindungsgemäß):

Man fällt in Anlehnung Beispiel 6 40kg des in Beispiel 1 erhaltenen PA 1010-Musters um; die Fällbedingungen werden dabei gegenüber Beispiel 10 folgendermaßen abgeändert:
Lösetemperatur: 155 °C, Keimbildungstemperatur/Zeit: 128 °C/60 min
Fälltemperatur: 120 °C, Fällungszeit: 1 Stunde, Rührerdrehzahl: 90 Upm

| | | |
|---|---|---|
| Kristallitschmelzpunkt Tₘ: | 192 °C und 206 °C | |
| Schmelzenthalpie: | 128 J/g | |
| Relative Lösungsviskosität ηᵣₑₗ: | 1,69 | |
| Schüttdichte 380g/l. | | BET: 6,80 m²/g |
| D(10%) = 44µm D(50%) = 69µm D(90%) = 103µm | | |

### Beispiel 9: Umfällung von PA 1012 (nicht erfindungsgemäß):

Man fällt entsprechend Beispiel 6 40 kg des in Beispiel 2 erhaltenen PA 1012-Granulatmusters um, wobei die Fällbedingungen gegenüber Beispiel 6 folgendermaßen abgeändert werden:
Lösetemperatur: 155 °C, Keimbildungstemperatur: 141 °C, Fälltemperatur: 123 °C,
Fällungszeit: 40 Minuten, Rührerdrehzahl: 110 Upm

| | | |
|---|---|---|
| Kristallitschmelzpunkt Tₘ: | 191 °C und 202 °C | |
| Schmelzenthalpie: | 148 J/g | |
| Relative Lösungsviskosität ηᵣₑₗ: | 1,69 | |
| Schüttdichte 430g/l. | | BET: 3,90 m²/g |
| D(10%) = 34µm D(50%) = 65µm D(90%) = 94µm | | |

### Beispiel 10: Umfällung von PA 1212 (nicht erfindungsgemäß):

Man fällt entsprechend Beispiel 6 40 kg des in Beispiel 4 erhaltenen PA 1212-Granulatmusters um, wobei die Fällbedingungen folgendermaßen abgewandelt werden:
Lösetemperatur: 155 °C, Keimbildungstemperatur: 123 °C, Keimbildungszeit: 60 min
Fälltemperatur: 117 °C, Fällungszeit: 60 Minuten, Rührerdrehzahl: 110 Upm

| | | |
|---|---|---|
| Schüttdichte 392g/l. | | BET: 5,60 m²/g |
| D(10%) = 33µm D(50%) = 75µm D(90%) = 114µm | | |
| Kristallitschmelzpunkt Tₘ: | 187 °C und 194 °C | |
| Schmelzenthalpie: | 143 J/g | |
| Relative Lösungsviskosität ηᵣₑₗ: | 1,79 | |

### Beispiel 11: Umfällung von PA 1013 (nicht erfindungsgemäß):

Man fällt entsprechend Beispiel 6 40 kg des in Beispiel 3 erhaltenen PA 1013-Granulatmusters um, wobei die Fällbedingungen folgendermaßen abgewandelt werden:
Lösetemperatur: 145 °C, Keimbildungstemperatur: 113 °C, Keimbildungszeit: 60 min
Fälltemperatur: 102 °C, Fällungszeit: 60 Minuten, Rührerdrehzahl: 110 Upm

| | | |
|---|---|---|
| Schüttdichte 452g/l. | | BET: 4,40 m²/g |
| D(10%) = 25µm D(50%) = 59µm D(90%) = 94µm | | |
| Kristallitschmelzpunkt Tₘ: | 182 °C und 190 °C | |
| Schmelzenthalpie: | 143 J/g | |
| Relative Lösungsviskosität ηᵣₑₗ: | 1,62 | |

### Beispiel 12: Gemeinsame Umfällung von PA 1010 mit PA11 (erfindungsgemäß):

Man fällt entsprechend Beispiel 6 je 20 kg des in Beispiel 1 erhaltenen PA 1010-Granulatmusters und des in Beispiel 6 eingesetzten RILSAN® BMNO TL (ARKEMA) um, wobei die Fällbedingungen folgendermaßen abgewandelt werden:
Lösetemperatur: 145 °C, Keimbildungstemperatur: 118°C, Keimbildungszeit: 60 min
Fälltemperatur: 112 °C, Fällungszeit: 60 Minuten, Rührerdrehzahl: 110 Upm

| | | |
|---|---|---|
| Schüttdichte 498g/l. | | BET: 1,40 m²/g |
| D(10%) = 41µm D(50%) = 66µm D(90%) = 103µm | | |
| Kristallitschmelzpunkt Tₘ: | 192 °C und 198 °C | |
| Schmelzenthalpie: | 127 J/g | |
| Relative Lösungsviskosität ηᵣₑₗ: | 1,72 | |

### Beispiel 13: Gemeinsame Umfällung von PA 1012 mit PA11 (erfindungsgemäß):

Man fällt entsprechend Beispiel 6 je 20 kg des in Beispiel 2 erhaltenen PA 1012-Granulatmusters und des in Beispiel 7 eingesetzten RILSAN® BMNO TL (ARKEMA) um, wobei die Fällbedingungen folgendermaßen abgewandelt werden:
Lösetemperatur: 155 °C, Keimbildungstemperatur: 118 °C, Keimbildungszeit: 60 min
Fälltemperatur: 108 °C, Fällungszeit: 60 Minuten, Rührerdrehzahl: 110 Upm

| | | |
|---|---|---|
| Schüttdichte 438g/l. | | BET: 7,40 m²/g |
| D(10%) = 44µm D(50%) = 69µm D(90%) = 104µm | | |
| Kristallitschmelzpunkt Tₘ: | 192 °C und 198 °C | |
| Schmelzenthalpie: | 127 J/g | |
| Relative Lösungsviskosität ηᵣₑₗ: | 1,72 | |

### Beispiel 14: Gemeinsame Umfällung von PA 1012 mit PA12 (erfindungsgemäß):

Man fällt entsprechend Beispiel 6 je 20 kg des in Beispiel 2 erhaltenen PA 1012-Granulatmusters und des in Beispiel 5 eingesetzten ungeregelten PA12 um, wobei die Fällbedingungen folgendermaßen abgewandelt werden:
Lösetemperatur: 155 °C, Keimbildungstemperatur: 118 °C, Keimbildungszeit: 60 min
Fälltemperatur: 111 °C, Fällungszeit: 60 Minuten, Rührerdrehzahl: 110 Upm

| | | |
|---|---|---|
| Schüttdichte 425g/l. | | BET: 8,10 m²/g |
| D(10%) = 34µm D(50%) = 62µm D(90%) = 114µm | | |
| Kristallitschmelzpunkt Tₘ: | 198 °C | |
| Schmelzenthalpie: | 137 J/g | |
| Relative Lösungsviskosität ηᵣₑₗ: | 1,64 | |

### Beispiel 15: Gemeinsame Umfällung von PA 1013 mit PA12 (erfindungsgemäß):

Man fällt entsprechend Beispiel 6 je 20 kg des in Beispiel 3 erhaltenen PA 1013-Granulatmusters und des in Beispiel 6 eingesetzten ungeregelten PA12 um, wobei die Fällbedingungen folgendermaßen abgewandelt werden:
Lösetemperatur: 145 °C, Keimbildungstemperatur: 114 °C, Keimbildungszeit: 60 min
Fälltemperatur: 101 °C, Fällungszeit: 60 Minuten, Rührerdrehzahl: 110 Upm

| | | |
|---|---|---|
| Schüttdichte 425g/l. | | BET: 7,20 m²/g |
| D(10%) = 23µm D(50%) = 46µm D(90%) = 78µm | | |
| Kristallitschmelzpunkt Tₘ: | 183 °C | |
| Schmelzenthalpie: | 117 J/g | |
| Relative Lösungsviskosität ηᵣₑₗ: | 1,64 | |

### Beispiel 16: Gemeinsame Umfällung von PA 1212 mit PA12 (erfindungsgemäß):

Man fällt entsprechend Beispiel 6 je 20 kg des in Beispiel 4 erhaltenen PA 1212-Granulatmusters und des in Beispiel 6 eingesetzten ungeregelten PA12 um, wobei die Fällbedingungen folgendermaßen abgewandelt werden:
Lösetemperatur: 152 °C, Keimbildungstemperatur: 118 °C, Keimbildungszeit: 60 min,
Fälltemperatur: 111 °C, Fällungszeit: 60 Minuten, Rührerdrehzahl: 110 Upm

| | | |
|---|---|---|
| Schüttdichte 408g/l. | | BET: 8,1 m²/g |
| D(10%) = 60µm D(50%) = 85µm D(90%) = 110µm | | |
| Kristallitschmelzpunkt Tₘ: | 186 °C | |
| Schmelzenthalpie: | 137 J/g | |
| Relative Lösungsviskosität ηᵣₑₗ: | 1,76 | |

### Beispiel 17: Gemeinsame Umfällung von CoPA 1012/12 mit PA12 (erfindungsgemäß):

Man fällt entsprechend Beispiel 6 je 20 kg des in Beispiel 5 1012/12-Granulatmusters und des in Beispiel 6 eingesetzten ungeregelten PA12 um, wobei die Fällbedingungen folgendermaßen abgewandelt werden:
Lösetemperatur: 145 °C, Keimbildungstemperatur: 112 °C, Keimbildungszeit: 45 min,
Fälltemperatur: 107 °C, Fällungszeit: 60 Minuten, Rührerdrehzahl: 120 Upm

| | | |
|---|---|---|
| Schüttdichte 424g/l. | | BET: 3,2 m²/g |
| D(10%) = 31 µm D(50%) = 54 µm D(90%) = 89 µm | | |
| Kristallitschmelzpunkt Tₘ: | 185 °C | |
| Schmelzenthalpie: | 120 J/g | |
| Relative Lösungsviskosität ηᵣₑₗ: | 1,65 | |

### Beispiel 18: Gemeinsame Umfällung von CoPA 1012/12 mit PA12 (erfindungsgemäß):

Man fällt entsprechend Beispiel 6 je 20 kg des in Beispiel 5 erhaltenen CoPA 1012/12-Granulatmusters und des in Beispiel 6 eingesetzten ungeregelten PA12 um, wobei die Fällbedingungen folgendermaßen abgewandelt werden:
Lösetemperatur: 145 °C, Keimbildungstemperatur: 112 °C, Keimbildungszeit: 45 min
Fälltemperatur: 110 °C, Fällungszeit: 60 Minuten, Rührerdrehzahl: 120 Upm

| | | |
|---|---|---|
| Schüttdichte 410g/l. | | BET: 4,8 m²/g |
| D(10%) = 29 µm D(50%) = 52 µm D(90%) = 91 µm | | |
| Kristallitschmelzpunkt Tₘ: | 185 °C | |
| Schmelzenthalpie: | 120 J/g | |
| Relative Lösungsviskosität ηᵣₑₗ: | 1,64 | |

### Beispiele 19: Gemeinsame Umfällung von PA 1012 mit PA12 (erfindungsgemäß):

Man fällt entsprechend Beispiel 6 2-kg des in Beispiel 2 erhaltenen PA 1012-Granulatmusters und 38 kg des in Beispiel 5 eingesetzten ungeregelten PA12 um, wobei die Fällbedingungen folgendermaßen abgewandelt werden:
Lösetemperatur: 142 °C, Keimbildungstemperatur: keine, Keimbildungszeit: keine
Fälltemperatur: 107 °C, Fällungszeit: 120 Minuten, Rührerdrehzahl: 110 Upm

| | | |
|---|---|---|
| Schüttdichte 426g/l. | | BET: 5,80 m²/g |
| D(10%) = 40µm D(50%) = 62µm D(90%) = 96µm | | |
| Kristallitschmelzpunkt Tₘ: | 184 °C | |
| Schmelzenthalpie: | 119 J/g | |
| Relative Lösungsviskosität ηᵣₑₗ: | 1,61 | |

### Beispiele 20: Gemeinsame Umfällung von PA 1012 mit PA12 (erfindungsgemäß):

Man fällt entsprechend Beispiel 6 2-kg des in Beispiel 2 erhaltenen PA 1012-Granulatmusters und 38 kg des in Beispiel 5 eingesetzten ungeregelten PA12 um, wobei die Fällbedingungen folgendermaßen abgewandelt werden:
Lösetemperatur: 142 °C, Keimbildungstemperatur: keine, Keimbildungszeit: keine
Fälltemperatur: 107 °C, Fällungszeit: 120 Minuten, Rührerdrehzahl: 110 Upm

| | | |
|---|---|---|
| Schüttdichte 409g/l. | | BET: 7,50 m²/g |
| D(10%) = 37µm D(50%) = 55µm D(90%) = 82µm | | |
| Kristallitschmelzpunkt Tₘ: | 185 °C | |
| Schmelzenthalpie: | 119 J/g | |
| Relative Lösungsviskosität ηᵣₑₗ: | 1,61 | |

### Beispiele 21: Gemeinsame Umfällung von PA 1013 mit PA12 (erfindungsgemäß):

Man fällt entsprechend Beispiel 6 6 kg des in Beispiel 3 erhaltenen PA 1013-Granulatmusters und 34 kg des in Beispiel 5 eingesetzten ungeregelten PA12 um, wobei die Fällbedingungen folgendermaßen abgewandelt werden:
Lösetemperatur: 147 °C, Keimbildungstemperatur: 113 °C, Keimbildungszeit: 30 min
Fälltemperatur: 109 °C, Fällungszeit: 120 Minuten, Rührerdrehzahl: 110 Upm

| | | |
|---|---|---|
| Schüttdichte 378g/l. | | BET: 8,20 m²/g |
| D(10%) = 28µm D(50%) = 51µm D(90%) = 83µm | | |
| Kristallitschmelzpunkt Tₘ: | 197 °C | |
| Schmelzenthalpie: | 124 J/g | |
| Relative Lösungsviskosität ηᵣₑₗ: | 1,64 | |

Das erfindungsgemäße Pulver zeichnet sich auch durch gute Rieselfähigkeit, bzw. gute Auftragbarkeit aus. Die Menge der einzusetzenden Rieselhilfe kann reduziert, bzw. es kann gänzlich auf Rieselhilfe verzichtet werden. Die nachfolgende Tabelle weist die gefundenen Resultate aus:

| Produkt | Auftragbar auf 3D-Systems SPro 60 HDHS | | Rieselzeit t_{R15} in sek | |
|---|---|---|---|---|
| | mit Rieselhilfe | ohne Rieselhilfe | mit Rieselhilfe | ohne Rieselhilfe |
| Pulver aus Bsp. 6: | ja | nein | 25,7 | Nicht rieselfähig |
| Pulver aus Bsp. 19 | Ja | Ja | 19 | 28 |
| Pulver aus Bsp. 20 | Ja | Ja | 17 | 24 |
| Pulver aus Bsp. 21 | ja | ja | 32 | 111 (mit klopfen) |

### Beispiele 22 - 25: Verarbeitung der erfindungsgemäßen Pulver PA12/PA1013 aus Beispiel 15 zu Formkörpern im SLS-Verfahren.

Sofern nicht anders erwähnt werden die nachfolgenden Verarbeitungsversuche auf einer EOSINT P380 - Maschine der Fa. EOS, Krailing durchgeführt:
**Beispiel 22:**
   Verarbeitungsbedingungen:
      Prozeßkammerheizung: 165°C
      Schichtstärke: 0,15 mm
      Laserleistung: 19 W
      Belichtungsgeschwindigkeit: 1100 mm/s
      Hatchabstand: 0,3mm
      Zugprüfergebnisse:
      E-Modul: 1800 MPa
      Zugfestigkeit: 46,5 MPa
      Kerbschlagzähigkeit bei -30°C: 5,45 KJ/m²
**Beispiel 23:**
   Verarbeitungsbedingungen:
      Prozeßkammerheizung:: 164°C
      Schichtstärke: 0,15 mm
      Laserleistung: 19 W
      Belichtungsgeschwindigkeit: 1100 mm/s
      Hatchabstand: 0,3 mm
   Zugprüfergebnisse:
      E-Modul: 1800 MPa
      Zugfestigkeit: 48,6MPa
      Kerbschlagzähigkeit bei -30°C: 4,14 KJ/m²
**Beispiel 24:**
   Verarbeitungsbedingungen:
      Prozeßkammerheizung: 167°C
      Schichtstärke: 0,15 mm
      Laserleistung: 19 W
      Belichtungsgeschwindigkeit: 1100 mm/s
      Hatchabstand: 0,3mm
   Zugprüfergebnisse:
      E-Modul: 1800MPa
      Zugfestigkeit: 47,7MPa
      Kerbschlagzähigkeit bei -30°C 4,2 KJ/m²
**Beispiel 25:**
   Verarbeitungsbedingungen:
      Prozeßkammerheizung: 175°C
      Schichtstärke: 0,15mm
      Laserleistung: 19W
      Belichtungsgeschwindigkeit: 1100 mm/s
      Hatchabstand: 0,3mm
   Zugprüfergebnisse:
      E-Modul: 1800MPa
      Zugfestigkeit: 51,0 MPa
      Vicat A - Temperatur: 176°C

### Beispiele 26 - 28: Verarbeitung der Pulver PA12/PA1012 aus Beispiel 14 zu Formkörpern im SLS-Verfahren.

Sofern nicht anders erwähnt werden die nachfolgenden Verarbeitungsversuche auf einer EOSINT P380 - Maschine der Fa. EOS, Krailing durchgeführt:
**Beispiel 26:**
   Verarbeitungsbedingungen
      Prozeßkammerheizung: 168°C
      Schichtstärke: 0,15mm
      Laserleistung: 19W
      Belichtungsgeschwindigkeit: 1100 mm/s
      Hatchabstand: 0,3mm
      Zugprüfergebnisse
      E-Modul: 1650MPa
      Zugfestigkeit: 49M Pa
**Beispiel 27:**
   Verarbeitungsbedingungen
      Prozeßkammerheizung: 169°C
      Schichtstärke: 0,15mm
      Laserleistung: 19W
      Belichtungsgeschwindigkeit: 1100 mm/s
      Hatchabstand: 0,3mm

      Zugprüfergebnisse
      E-Modul: 1600MPa
      Zugfestigkeit: 48MPa
**Beispiel 28:**
   Verarbeitungsbedingungen:
      Verarbeitung auf einer HiQ SLS System - Maschine
      Verarbeitungstemperatur: 169°C
      Schichtstärke 0,1mm
      Laserleistung: 13W
      Belichtungsgeschwindigkeit: 5m/s
      Hatchabstand:0,3mm
      Zugprüfergebnisse
      E-Modul: 1650 MPa
      Zugfestigkeit: 47 MPa

### Beispiel 29: Verarbeitungsbeispiel mit Material aus Beispiel 19

Verarbeitung auf 3D-Systems SPro 60 HDHS
Verarbeitungstemperatur: 168°C
Schichtstärke 0,1 mm
Laserleistung: 58W
Belichtungsgeschwindigkeit: 12m/s
Hatchabstand: 0,2mm

Zugprüfergebnisse
E-Modul: 1800 MPa
Zugfestigkeit: 48 MPa

### Beispiel 30: Verarbeitungsbeispiel mit Material aus Beispiel 20

Verarbeitung auf 3D-Systems SPro 60 HDHS
Verarbeitungstemperatur: 169°C
Schichtstärke 0,1mm
Laserleistung: 58W
Belichtungsgeschwindigkeit: 12m/s
Hatchabstand:0,2mm

Zugprüfergebnisse
E-Modul: 1850 MPa
Zugfestigkeit: 48 MPa

### Beispiel 31: Verarbeitungsbeispiel mit Material aus Beispiel 21

Verarbeitung auf 3D-Systems SPro 60 HDHS
Verarbeitungstemperatur: 166°C
Schichtstärke 0,1 mm
Laserleistung: 58W
Belichtungsgeschwindigkeit: 12m/s
Hatchabstand: 0,2mm

Zugprüfergebnisse
E-Modul: 1750 MPa
Zugfestigkeit: 40 MPa

### Beispiel 32: Verarbeitung des Pulvers PA12/PA1212 aus Beispiel 16 zu Formkörpern im SLS-Verfahren. Verarbeitung erfolgte auf EOSINT P380

Verarbeitungsbedingungen:
   Prozeßkammerheizung: 168°C
   Schichtstärke: 0,15mm
   Laserleistung: 19W
   Belichtungsgeschwindigkeit: 1100 mm/s
   Hatchabstand: 0,3mm

### Beispiele 33 - 34: Verarbeitung der Pulver PA12 aus Beispiel 6 zu Formkörpern, Vergleichsbeispiele, nicht erfindungsgemäß.

Die Verarbeitungsversuche wurden auf einer EOSINT P380 - Maschine der Fa. EOS, Krailing durchgeführt:
**Beispiel 33:**
   Zugprüfergebnisse:
      E-Modul: 175MPa
      Zugfestigkeit: 50 MPa
      Kerbschlagzähigkeit bei -30°C: 3,09 KJ/m²
      Vicat A-Temperatur: 165°C
**Beispiel 34:**
   Verarbeitungsbedingungen:
      Prozeßkammerheizung: 179°C
      Schichtstärke: 0,15mm
      Laserleistung: 19W
      Belichtungsgeschwindigkeit: 1100 mm/s
      Hatchabstand: 0,3mm
   Zugprüfergebnisse:
      E-Modul: 1750MPa
      Zugfestigkeit: 48 MPa
      Kerbschlagzähigkeit bei -30°C: 3,09 KJ/m²
      Vicat A-Temperatur: 165°C
**Beispiel 35:** Verarbeitung des Pulver PA1013 aus Beispiel 11 zu Formkörpern, Vergleichsbeispiele, nicht erfindungsgemäß.
   Die Verarbeitung wurden auf einer EOSINT P380 - Maschine der Fa. EOS, Krailing durchgeführt:
   Verarbeitungsbedingungen:
      Prozesskammertemperatur: 169°C
      Schichtstärke: 0,15mm
      Laserleistung: 24W
      Belichtungsgeschwindigkeit: 1100 mm/s
      Hatchabstand: 0,3mm
   Zugprüfergebnisse:
      E-Modul: 1900 MPa
      Zugfestigkeit: 47 MPa
      Kerbschlagzähigkeit bei -30°C: 2,92KJ/m²

## Patentansprüche

1. Polymerpulver zur Verwendung in einem schichtweise arbeitenden Verfahren, bei dem selektiv Bereiche der jeweiligen Pulverschicht durch den Eintrag elektromagnetischer Energie aufgeschmolzen werden,
enthaltend:
zumindest ein Polyamid des AB-Typs, hergestellt durch Polymerisation von Lactamen mit 10 - 12 Kohlenstoffatomen in der Monomereineit oder durch Polykondensation der entsprechenden ω-Aminocarbonsäuren mit 10 - 12 Kohlenstoffatomen in der Monomereinheit und
zumindest ein Polyamid des AABB-Typs, hergestellt durch Polykondensation von Diaminen und Dicarbonsäuren mit jeweils 10-14 Kohlenstoffatomen in den Monomereinheiten, wobei das Polyamid des AB-Typs bis zu 20 mol-% der AABB-Comonomereinheiten und das Polyamid des AABB-Typs bis zu 20 Mol% der AB-Monomereinheiten enthalten kann.

2. Polymerpulver nach Anspruch 1, wobei das Pulver durch gemeinsame Fällung des zumindest einem Polyamid des AB-Types und des zumindest einem Polyamid des AABB-Types erhalten wird.

3. Polymerpulver nach mindestens einem der vorstehenden Ansprüche, wobei das Pulver zumindest Polyamid 11 oder Polyamid 12 und zumindest ein Homopolyamid auf der Basis von PA1010, PA1012, PA1212 oder PA1013 enthält.

4. Polymerpulver nach Anspruch 1 oder 2, wobei das Polyamid des AB-Typs bis zu 10 mol-%, oder bis zu 5 mol-% der AABB-Comonomereinheiten enthalten kann und das Polyamid des AABB-Typs bis zu 10 Mol% oder bis zu 5 mol-% der AB-Monomereinheiten enthalten kann.

5. Polymerpulver nach mindestens einem der vorstehenden Ansprüche, wobei das Pulver Polyamide des AB-Typs und Polyamide des AABB-Typs im Massenverhältnis 98:2 bis 2:98, oder 90:10 bis 10:90, oder 70:30 bis 30:70 enthält.

6. Polymerpulver nach mindestens einem der vorstehenden Ansprüche, wobei das Pulver eine relative Lösungsviskosität gemessen in 0.5 Gew.-%-iger Lösung in m-Kresol nach ISO 307 zwischen 1,4 bis 2,1 oder 1,5 bis 1,9 oder 1,6 bis 1,7 aufweist.

7. Polymerpulver nach mindestens einem der vorstehenden Ansprüche, wobei das Pulver eine mittlere Partikelgröße zwischen 10 und 250 µm oder 45 und 150 µm oder 50 und 125 µm aufweist.

8. Polymerpulver nach mindestens einem der vorstehenden Ansprüche, wobei das Pulver Hilfsstoffe, vorzugsweise ausgewählt aus Rieselhilfsmitteln und Metallseifen und/oder Füllstoffe vorzugsweise ausgewählt aus Glaspartikeln, Metallpartikeln und organischen und/oder anorganischen Pigmenten insbesondere Titandioxid oder Ruß enthält.

9. Verfahren zur Herstellung eines Polymerpulvers nach Anspruch 1 - 8, wobei die jeweiligen Polyamidkomponenten in einem Alkohol mit 1 - 3 Kohlenstoffatomen gemeinsam durch Erwärmen in Lösung gebracht werden, die Temperatur in einer oder mehreren Stufen auf eine Temperatur abgesenkt wird, bei der ein Mischpolyamid ausfällt, das Mischpolyamid von dem Lösungsmittel abgetrennt und/oder getrocknet wird und ggf. Hilfs- oder Füllstoffe in das Pulver eingemischt werden.

10. Verfahren nach Anspruch 9, wobei die Polyamidkomponenten bei einer Temperatur von 130°C - 180°C unter autogenem Druck in Lösung gebracht und anschließend die Temperatur in einer oder mehreren Stufen auf 90°C - 128°C abgesenkt wird.

11. Verfahren nach mindestens einem der Ansprüche 9 und 10, wobei nach dem Auflösen die Temperatur 10 Minuten - 3 Stunden bei 110°C - 128°C gehalten wird und anschließend die Temperatur in einer oder mehreren weiteren Stufen auf 90°C - 118°C abgesenkt wird.

12. Verfahren zur Herstellung von Formkörpern durch ein schichtweise arbeitendes Verfahren, bei dem selektiv Bereiche der jeweiligen Polymerpulverschicht durch Eintrag elektromagnetischer Energie aufgeschmolzen werden, wobei ein Polymerpulver nach mindestens einem der Ansprüche 1 - 8 verwendet wird.

13. Verfahren nach Anspruch 12, wobei die Selektivität durch die Auftragung von Suszeptoren, Inhibitoren, Absorbern, durch Masken oder durch die Fokussierung eines Laserstrahls erzielt wird.

14. Formkörper, der aus dem Polymerpulver nach mindestens einem der Ansprüche 1 - 8 durch ein direktes fortbildendes Verfahren erhalten worden ist.

15. Formkörper nach Anspruch 14, wobei der Formkörper durch ein schichtweise arbeitendes Verfahren, bei dem selektiv Bereiche der jeweiligen Pulverschicht durch den Eintrag elektromagnetischer Energie aufgeschmolzen werden, hergestellt wird und die Selektivität durch die Auftragung von Suszeptoren, Inhibitoren, Absorbern oder durch Masken oder durch die Fokussierung eines Laserstrahls erzielt wird.

## Claims

1. Polymer powder for use in a layer-by-layer process in which regions of the respective powder layer are melted selectively by introducing electromagnetic energy,
comprising:
at least one polyamide of the AB type, produced by polymerizing lactams having from 10 to 12 carbon atoms in the monomer unit or by polycondensing the corresponding ω-aminocarboxylic acids having from 10 to 12 carbon atoms in the monomer unit and
at least one polyamide of the AABB type, produced by polycondensing diamines and dicarboxylic acids having respectively from 10 to 14 carbon atoms in the monomer units, where the polyamide of the AB type can comprise up to 20 mol% of the AABB comonomer units and the polyamide of the AABB type can comprise up to 20 mol% of the AB monomer units.

2. Polymer powder according to Claim 1, where the powder is obtained by coprecipitation of the at least one polyamide of the AB type and of the at least one polyamide of the AABB type.

3. Polymer powder according to at least one of the preceding claims, where the powder comprises at least nylon-11 or nylon-12 and at least one homopolyamide based on PA1010, PA1012, PA1212 or PA1013.

4. Polymer powder according to Claim 1 or 2, where the polyamide of the AB type can comprise up to 10 mol%, or up to 5 mol%, of the AABB comonomer units and the polyamide of the AABB type can comprise up to 10 mol% or up to 5 mol% of the AB monomer units.

5. Polymer powder according to at least one of the preceding claims, where the powder comprises polyamides of the AB type and polyamides of the AABB type in a ratio by mass of from 98:2 to 2:98, or from 90:10 to 10:90, or from 70:30 to 30:70.

6. Polymer powder according to at least one of the preceding claims, where the relative solution viscosity of the powder is from 1.4 to 2.1, or from 1.5 to 1.9, or from 1.6 to 1.7, measured in 0.5% by weight solution in m-cresol in accordance with ISO 307.

7. Polymer powder according to at least one of the preceding claims, where the average particle size of the powder is from 10 to 250 µm, or from 45 to 150 µm, or from 50 to 125 µm.

8. Polymer powder according to at least one of the preceding claims, where the powder comprises auxiliaries, preferably selected from powder-flow aids and metal soaps, and/or comprises fillers preferably selected from glass particles, metal particles, and organic and/or inorganic pigments, in particular titanium dioxide or carbon black.

9. Process for producing a polymer powder according to any of Claims 1 to 8, where the respective polyamide components are codissolved by heating in an alcohol having from 1 to 3 carbon atoms, the temperature is lowered in one or more stages to a temperature at which a copolyamide precipitates, the copolyamide is isolated from the solvent and/or is dried, and auxiliaries or fillers are optionally mixed into the powder.

10. Process according to Claim 9, where the polyamide components are dissolved under autogenous pressure at a temperature of from 130°C to 180°C and then the temperature is lowered in one or more stages to from 90°C to 128°C.

11. Process according to at least one of Claims 9 and 10, where, after the dissolution process, the temperature is kept at from 110°C to 128°C for from 10 minutes to 3 hours and then the temperature is lowered in one or more further stages to from 90°C to 118°C.

12. Process for producing moldings by a layer-by-layer process in which regions of the respective polymer powder layer are melted selectively by introducing electromagnetic energy, where a polymer powder according to at least one of Claims 1 to 8 is used.

13. Process according to Claim 12, where the selectivity is achieved by applying susceptors, inhibitors, or absorbers, or by masks, or by focusing a laser beam.

14. Molding obtained from the polymer powder according to at least one of Claims 1 to 8 by a direct progressive construction process.

15. Molding according to Claim 14, where the molding is produced by a layer-by-layer process in which regions of the respective powder layer are melted selectively by introducing electromagnetic energy, and the selectivity is achieved by applying susceptors, inhibitors, or absorbers, or by masks, or by focusing a laser beam.

## Revendications

1. Poudre polymère pour une utilisation dans un procédé travaillant par couches, dans lequel des zones de la couche de poudre en question sont fondues sélectivement par introduction d'énergie électromagnétique, contenant :
au moins un polyamide de type AB, préparé par polymérisation de lactames comprenant 10-12 atomes de carbone dans l'unité monomère ou par polycondensation des acides ω-aminocarboxyliques correspondants comprenant 10-12 atomes de carbone dans l'unité monomère, et
au moins un polyamide de type AABB, préparé par polycondensation de diamines et d'acides dicarboxyliques comprenant à chaque fois 10-14 atomes de carbone dans les unités monomères, le polyamide de type AB pouvant contenir jusqu'à 20% en mole d'unités comonomères AABB et le polyamide du type AABB pouvant contenir jusqu'à 20% en mole d'unités monomères AB.

2. Poudre polymère selon la revendication 1, la poudre étant obtenue par précipitation commune dudit au moins un polyamide du type AB et dudit au moins un polyamide du type AABB.

3. Poudre polymère selon au moins l'une quelconque des revendications précédentes, la poudre contenant au moins du polyamide 11 ou du polyamide 12 et au moins un homopolyamide à base de PA1010, PA1012, PA1212 ou PA1013.

4. Poudre polymère selon la revendication 1 ou 2, le polyamide du type AB pouvant contenir jusqu'à 10% en mole ou jusqu'à 5% en mole d'unités comonomères AABB et le polyamide du type AABB pouvant contenir jusqu'à 10% en mole ou jusqu'à 5% en mole d'unités monomères AB.

5. Poudre polymère selon au moins l'une quelconque des revendications précédentes, la poudre contenant des polyamides du type AB et des polyamides du type AABB dans un rapport massique de 98:2 à 2:98 ou de 90:10 à 10:90 ou de 70:30 à 30:70.

6. Poudre polymère selon au moins l'une quelconque des revendications précédentes, la poudre présentant une viscosité relative en solution, mesurée dans une solution à 0,5% en poids dans du m-crésol selon la norme ISO 307, entre 1,4 et 2,1 ou entre 1,5 et 1,9 ou entre 1,6 et 1,7.

7. Poudre polymère selon au moins l'une quelconque des revendications précédentes, la poudre présentant une grosseur moyenne des particules entre 10 et 250 µm ou entre 45 et 150 µm ou entre 50 et 125 µm.

8. Poudre polymère selon au moins l'une quelconque des revendications précédentes, la poudre contenant des adjuvants, de préférence choisis parmi les adjuvants d'écoulement et les savons métalliques et/ou les charges, de préférence choisies parmi les particules de verre, les particules métalliques et les pigments organiques et/ou inorganiques, en particulier le dioxyde de titane ou la suie.

9. Procédé pour la préparation d'une poudre polymère selon la revendication 1-8, les différents composants de type polyamide étant mis en solution ensemble par chauffage dans un alcool comprenant 1-3 atomes de carbone, la température étant abaissée en une ou plusieurs étapes à une température à laquelle un polyamide mixte précipite, le polyamide mixte étant séparé du solvant et/ou séché et des adjuvants ou des charges étant le cas échéant mélangés dans la poudre.

10. Procédé selon la revendication 9, les composants polyamide étant amenés en solution à une température de 130°C-180°C sous une pression autogène, puis la température étant abaissée en une ou plusieurs étapes à 90°C-128°C.

11. Procédé selon au moins l'une quelconque des revendications 9 et 10, la température étant maintenue, après la dissolution, pendant 10 minutes-3 heures à 110°C-128°C, puis la température étant abaissée en une ou plusieurs autres étapes à 90°C-118°C.

12. Procédé pour la préparation de corps façonnés par un procédé travaillant par couches, dans lequel des zones de la couche de poudre polymère en question sont fondues sélectivement par introduction d'énergie électromagnétique, en utilisant une poudre polymère selon au moins l'une quelconque des revendications 1-8.

13. Procédé selon la revendication 12, la sélectivité étant obtenue par application de suscepteurs, d'inhibiteurs, d'absorbants, par des masques ou par la focalisation d'un rayon laser.

14. Corps façonné, obtenu à partir de la poudre polymère selon au moins l'une quelconque des revendications 1-8 par un procédé direct de formation.

15. Corps façonné selon la revendication 14, le corps façonné étant obtenu par un procédé travaillant par couches, dans lequel des zones de la couche de poudre en question sont fondues sélectivement par introduction d'énergie électromagnétique et la sélectivité est obtenue par l'application de suscepteurs, d'inhibiteurs, d'absorbants ou par des masques ou par la focalisation d'un rayon laser.
